# EUROPEAN PATENT APPLICATION

(11) **EP 0 841 788 A1**
(43) Date of publication of application: **13.05.1998**
(21) Application number: 96308155.9
(22) Date of filing: 12.11.1996
(51) Int. Cl.: H04L 29/06

(54) **Telecommunications network**

(71) Applicant: BRITISH TELECOMMUNICATIONS public limited company, London EC1A 7AJ (GB)
(72) Inventor: Gittins, Christpher John, Felixstowe, Suffolk IP11 9NJ (GB)
(74) Representative: Atkinson, Ralph

(57) **Abstract**

Telecommunications network has a service node (401) accessible from a plurality of customer stations (212,410,408). Remote databases (404,405) are searched in response to a search strategy generated by customers. Details of the search strategy are transmitted from a customer station (402) to the service node (401). The customer station (402) is disconnected from the service node and the search strategy is issued from the service node (401) to obtain response data. The response data is stored at the service node which further retains an indication to the effect that the response data has been obtained to provide an indication, possibly via a pager (414) to the requesting customer.

## Description

The present invention relates to a telecommunications network having a service node accessible from a plurality of customer stations.

### INTRODUCTION

The functionality of telecommunications networks and in particular switched voice signal based networks, has been enhanced in recent years by the inclusion of service nodes within such networks. Service nodes provide a level of embedded intelligence within the network such that many operations which would need to be performed manually, such as forwarding calls from one location to another, may be programmed into the network itself.

Traditionally, many of these added benefits have been directed specifically at voice traffic and have, to a large extent, allowed functionality originally engineered for private branch exchanges to be incorporated within a public switched network.

However, due to increased competition from other forms of data traffic, predominantly for conveying machine generated data, such as the internet, it has been appreciated that additional levels of functionality may be required within the network which are directed more to these alternative modes of operation.

### SUMMARY OF THE INVENTION

According to a first aspect of the present invention, there is provided, in a telecommunications network having a service node accessible from a plurality of customer stations, a method of searching remote databases in response to a search strategy, comprising steps of transmitting details of a search strategy from a customer station to said service node; disconnecting said customer station from said service node; issuing said search strategy from said service node to obtain response data; storing said response data at said service node; and retaining an indication to the effect that said response data has been obtained to provide an indication to said requesting customer.

Preferably, strategy details are transmittable via a plurality of transmission types, such as from a mobile computer via a mobile telephone using full bandwidth data transmission or SMS transmission. Similarly, the data may be received from a device configured to recognise operator handwriting.

In a preferred embodiment, the strategy details include at least one keyword and the service node is arranged to identify remotely stored data containing this keyword. Preferably, response data is copied to the service node and stored at said service node. The data may include a reference to an address, in the form of a internet unique resource locator and an abstract.

Possibly, the customer station which initiated the search may itself not be capable of receiving the identified data stored at the service node and is therefore retrieved by a customer at an alternative location. The indication data may be transmittable in accordance with a plurality of transmission types and the transmission type may be selected independent upon information stored at the service node specifying customer preferences. Preferably, the service node is configured to contact an initiating customer to identify the presence of data stored at said service node in response to the execution of the strategy. The identification of the presence of this data may be transmitted in accordance with the first transmission type and the stored data indications may subsequently be transmitted in accordance with the second transmission type. Thus, said first transmission type may consist of a paging signal or an SMS message or even human recognisable speech. A customer may then be invited to select a particular second transmission type, possibly with a default being provided if no selection is made and, if required, the stored data may be modified in accordance with the selected second transmission type.

### BRIEF DESCRIPTION OF THE DRAWINGS

Figure 1 illustrates a public switched telephone network arranged to transmit voice-based signals or modulated audio tones;
Figure 2 illustrates a digital cellular network for connecting mobile telephony equipment to public switched networks, similar to that shown in Figure 1;
Figure 3 illustrates the "Internet", a network for the distribution of digital data;
Figure 4 illustrates a functional interworking of the networks illustrated in Figures 1, 2 and 3, including a service node;
Figure 5 illustrates operations performed by the service node identified in Figure 4; and
Figure 6 details the construction of the service node shown in Figure 4.

### DETAILED DESCRIPTION OF THE PREFERRED EMBODIMENTS

The invention will now be described by way of example only with reference to the accompanying drawings identified above.

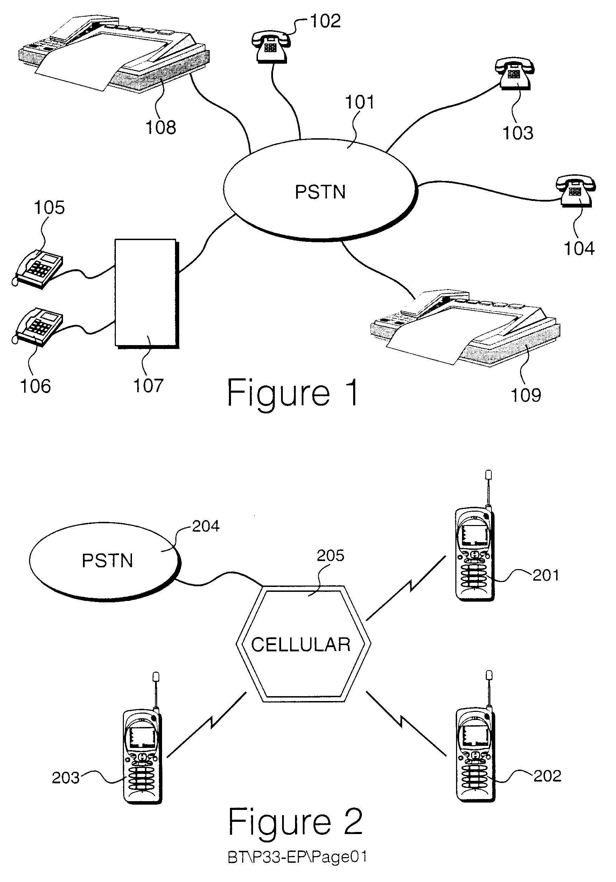

A Public Switched Telephone Network is illustrated generally at 101 in Figure 1. The network primarily provides connection to voice-based analogue telephone units 102, 103 and 104. Digital telephones 105 and 106 are given access to the PSTN 101 by a private digital exchange 107. Data transmission devices such as fax machines 108 and 109, in addition to modems and similar devices, allow data to be transmitted through the PSTN by the modulation of audio tones. Thus, PSTN 101 is essentially a voice based system and its transmission characteristics are designed to facilitate the transmission of a voice signal using minimal bandwidth with minimal distortion.

Similar networks all provide data transmission in digital form direct to customers, in accordance with standards specified by the Integrated Services Digital Network (ISDN). These systems facilitate improved data transmission for customers and are not specifically directed to the transmission of voice signals. However, a particular bandwidth is guaranteed and maintained while ever a connection remains active.

A GSM cellular system is shown in Figure 2, allowing digital mobile phones 201, 202 and 203 etc to mutually communicate and to communicate with a public switched network 204, similar or equivalent to network 101 shown in Figure 1. The cellular network itself includes a plurality of slightly overlapping transmission cells, illustrated generally as 205 in Figure 2.

The mobile telephones are primarily designed for the transmission of digitised speech although they also provide for the transmission and reception of machine generated data. Data within a mobile GSM environment may be transmitted in two ways. Firstly, the full voice channel may be made available, to provide a data channel with a capacity of 9.6 Kbits/second. In addition, a channel of lower bandwidth is also provided as part of the GSM signaling channel, for short messages and is usually referred to as the "Short Message Service", usually abbreviated to "SMS". Thus, SMS messages may be transmitted from the phone while it is effectively in its idle state, given that these messages are transmitted over the signaling broadcast channel.

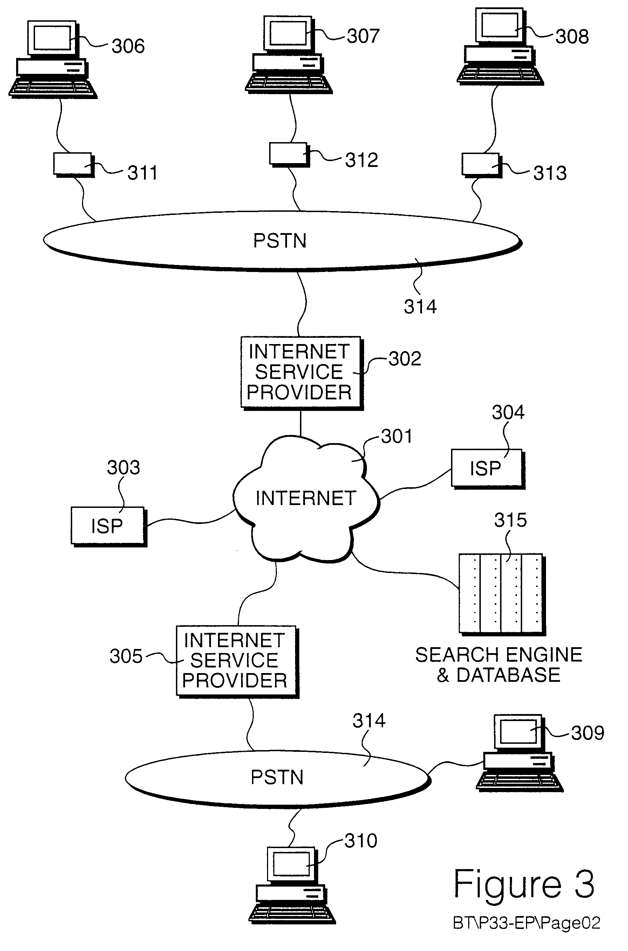

A representation of the internet is illustrated in Figure 3, with the internal workings of the system illustrated generally at 301. Access to the internet is achieved typically via an internet service provider, such as provider 302, 303, 304 and 305. The majority of users have computer based terminals, such as terminals 306, 307, 308, 309 and 310. Many computer systems of this type, such as systems 309 and 310, include inbuilt modems. Alternatively, external modems, such as modems 311, 312 and 313 may be used to provide connection between terminals 306, 307 and 308 to internet service provider 302 via public switch networks 314.

Users 306 to 310 are primarily concerned with the interchange of information, using e-mail facilities and the retrieval of information from remote databases. These databases are established by service providers and an example of a search engine and database of this type is illustrated at 315. Thus, in response to specific requests in the form of keywords etc being supplied to the database system 315, it is possible for the search engine associated with the said database to perform a search of its stored data and to thereafter provide an indication of the availability of such data to the requesting user. In response to this indication, usually in the form of small abstracts and addresses, the user may peruse the information supplied and request more information, by effecting use of the addresses returned, so as to retrieve data as and when required.

In the environments shown in Figures 1 and 2, the degree of bandwidth provided for a particular user will be fixed, when a communication channel becomes active, given that the transmission characteristics must facilitate the transmission of real time speech signals. Similarly, this degree of bandwidth will be guaranteed in the system shown in Figure 3, between individual users and their respective service providers, given that similar technology to that shown in Figure 1 is usually employed. The allocation of bandwidth within the system shown in Figure 3 becomes less reliable during transmission through the core of the internet 301. The level of bandwidth available to particular users typically varies between tens of bytes per second and thousands of bytes per second, depending on overall usage being made. Similarly, the rate at which data may be returned from databases will depend upon the technical ability of these databases and also upon the level of demands being placed upon them. Thus, unlike the environments shown in Figures 1 and 2, the rates of data transfer through the internet 301 and consequently through the overall network shown in Figure 3, will vary and at any time, a level of service cannot be guaranteed.

It can also be seen that the cellular network shown in Figure 2 effectively makes use of the public switched network detailed in Figure 1. Similarly, the internet 301 also makes use of the public switched network, as illustrated in Figure 3 and may also be connected to cellular systems, similar to those shown in Figure 2, when mobile telephones are being used for data transmission to effect a connection to the internet.

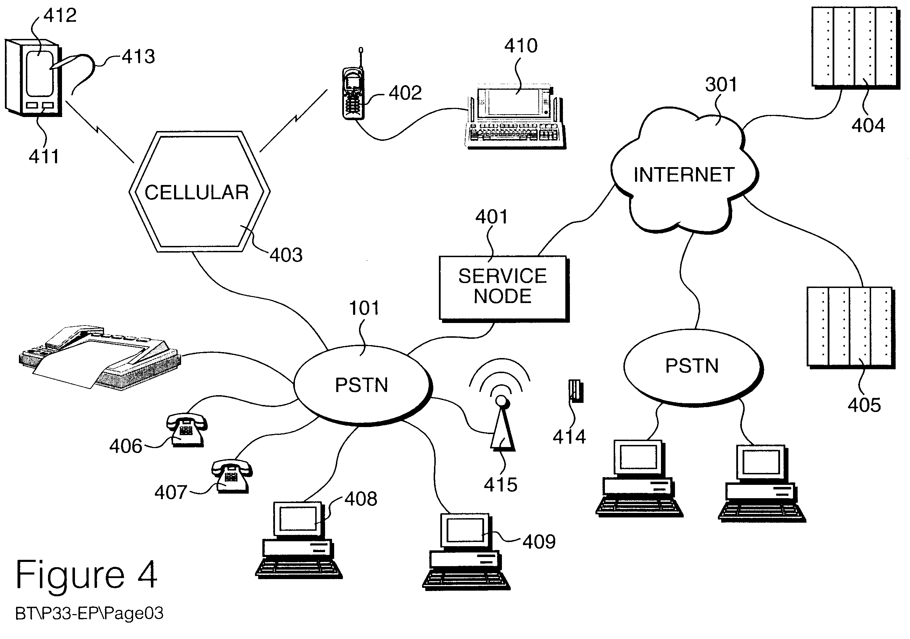

Within the public switched telephone environment, service nodes are known which provide the network with enhanced features. In the example shown in Figure 4, a service node 401 provides a gateway between the PSTN 101 and the internet 301. A cellular mobile telephone 402 may also establish communication with the internet 301 via its cellular network 403, the PSTN 101 and service node 401.

The internet 301 is shown having access to a first database system 404 and a second database system 405.

The telecommunications network as a whole may be regarded as having a service node 401 accessible from a plurality of customer stations, including stations 406, 407, 408 and 409 in addition to the cellular station 402. In this example, a customer requires to access a database and wishes to obtain information which will require the database to perform a search. In conventional environments, it would have been necessary for the customer to remain logged on to the database while the search continues. This may take a considerable period of time, due to congestion at the database itself, such as database 404, along with congestion through the internet 301. If a connection of this type is being established via a mobile telephone, such as via station 402, the cost of maintaining such a connection becomes relatively large and, possibly, it may become difficult to justify the cost of the call in relation to the benefit gained from the data retrieved.

Customer charging in the PSTN network 101 and the GSM network 403 is based on an assumption that a level of service, in terms of reliability and bandwidth, is predictable and remains substantially constant throughout a call. These constraints do not apply to the internet 301 and to an even larger extent, do not apply to search engines and similar devices attached to the internet 301. The first problem arises in terms of the provision of bandwidth within the internet 301 and the second problem arises in terms of the processing power of the search engines, the volume of data contained within databases and the degree of processing required when a particular search is implemented.

The problems associated with searching also become more apparent when searching specialized databases which, given the degree of demand, are often built around relatively modest machines, resulting in a significant amount of processing time being required in order to implement the search and identify requested information.

A search strategy may be defined by an operator in terms of listing keywords from which related information is to be derived from a database. These keywords may be defined on a laptop computer, such as computer 410, whereafter a digitized representation of these keywords may be supplied to the telecommunications network by a mobile phone 402, operating in data transmission mode. Similarly, other devices may be provided for establishing communications through the GSM network 403, such as Personal Digital Assistant systems (PDA's), as illustrated by device 411. PDA 411 includes a touch sensitive screen 412 onto which instructions may be written by a stylus 413. In this way, it is possible to make selections from menus displayed on the screen or, alternatively, to use character recognition software such that machine generated data may be derived from user handwriting. However, when using either the mobile phone and laptop computer (402, 410) arrangements or the personal digital assistant 411, the duration over which a connection is established through the GSM network 403 should be optimised in relation to the value of data being retrieved from databases 404 and 405 etc.

A search strategy, defined on the laptop computer 410 or on the PDA 411 is transmitted to service node 401, by the GSM network 403 and the PSTN network 101. These details are retained within the service node 401, whereafter the customer station is disconnected, thereby effectively terminating the call through the GSM network. Alternatively, a call of this type may have originated from a computer, such as computer 408, connected directly to the PSTN and again details of the search strategy are supplied to the service node 401, retained in said node, whereafter the connection through the PSTN, that is the call financed by customer at station 408, is terminated.

The call performed through the PSTN and possibly through the GSM network 403 has been of a duration sufficient to allow the search strategy details to be transferred to the service node 401. It is now no longer necessary for the call to be maintained while the search is actually implemented. Thus, delays through the internet 301 and delays incurred at the search engine 404 do not result in an extended call being experienced through the switched networks 403 and 101.

The search strategy is issued through the internet 301 under the control of the service node 401. This results in a search engine at 404 performing a search and returning information, usually in the form of further internet addresses along with a short (possibly three-line) abstract. This response data is stored at the service node, along with an indication to the effect that the response data has been obtained. In this way, it is now possible for an indication to the effect that response data has been stored to be returned back to a customer, either passively when a customer makes a further enquiry to see if the information is available or actively, by means of the service node contacting the customer concerned. The customer may be contacted in many ways using many possible transmission types, not necessarily limited to the transmission types used for establishing the search in the first place. Thus, for example, the customer may be notified via a radio pager 414, arranged to receive a paging signal via a transmitter 415 connected to the PSTN 101.

The service node may not need to use the internet in order to obtain information if this information has been stored locally. Under these conditions, the locally stored information is accessed, stored for rapid transmission to a customer, with the indication being notified to the effect that the information is now available for the customer.

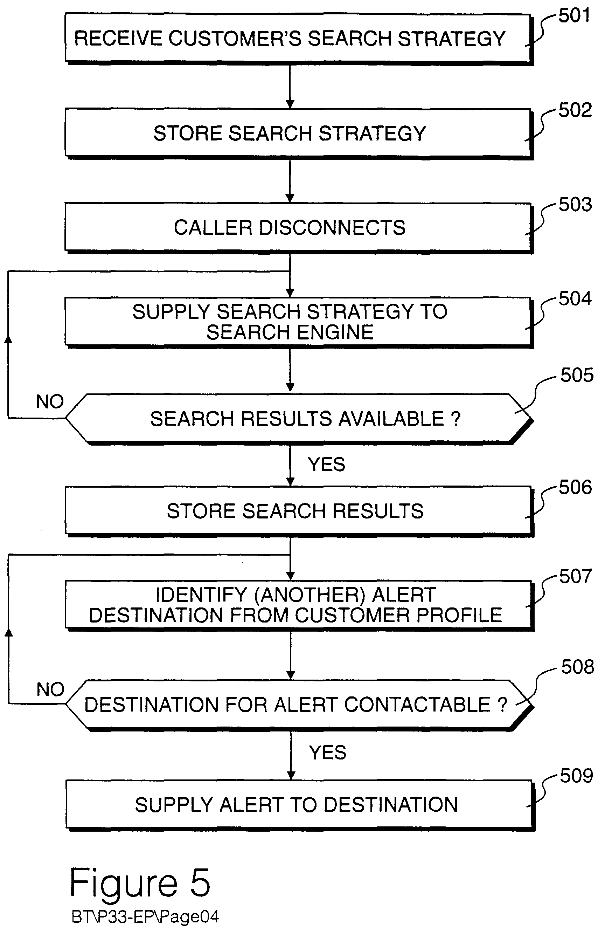

Operations of the service node 401 are illustrated in Figure 5. At step 501 the customer search strategy is received and at step 502 the search strategy is stored. At step 503 the caller disconnects from the service node, whereafter the call may be terminated or the call may be used to perform other functions.

The service node 401 is now responsible for organising the search locally or via its connection to the internet. At step 504 the search strategy is supplied to the search engine 404 via the internet, whereafter at step 505 the node asks a question as to whether the search results are available. The node takes no further action and waits until the search results do become available, resulting in a question asked at 505 being answered in the affirmative and control being directed to step 506.

At step 506 the search results are stored in customer specific storage space or in shared storage space at the service node 491, At step 507 a first preferred alert destination is identified from stored information at the service node, defining the customer profile. The node 401 then attempts to contact customer at the alert destination and at step 508 a question is asked as to whether the destination for the alert is contactable. The destination for the alert may be a PSTN phone and the alert message may be transmitted as a voice message. Consequently, in some circumstances, the PSTN phone may be busy or not answered. Consequently, the question asked at step 508 will be answered in the negative and an attempt will again be made at step 507 to identify another alert destination from the customer profile. Thus, a further attempt will be made to supply the alert to the customer and if all attempts of this type fail, information to the effect that the search results are available will be retained internally at the node so as to provide this information, possibly via a HTML page or as a voice announcement, when a customer makes a further enquiry. The information may be retained for a pre-set duration, specified by system administrators.

However, if the question asked at step 508 is answered in the affirmative and the destination for the alert is contactable, the alert is supplied to the destination at 509. As previously stated, this may take the form of an SMS message to a mobile phone, an activation signal to a radio pager, a voice call to a PSTN phone or a mobile phone, using a text to speech facility or a pre-recorded alert message, an e-mail to a specified address or a facsimile etc.

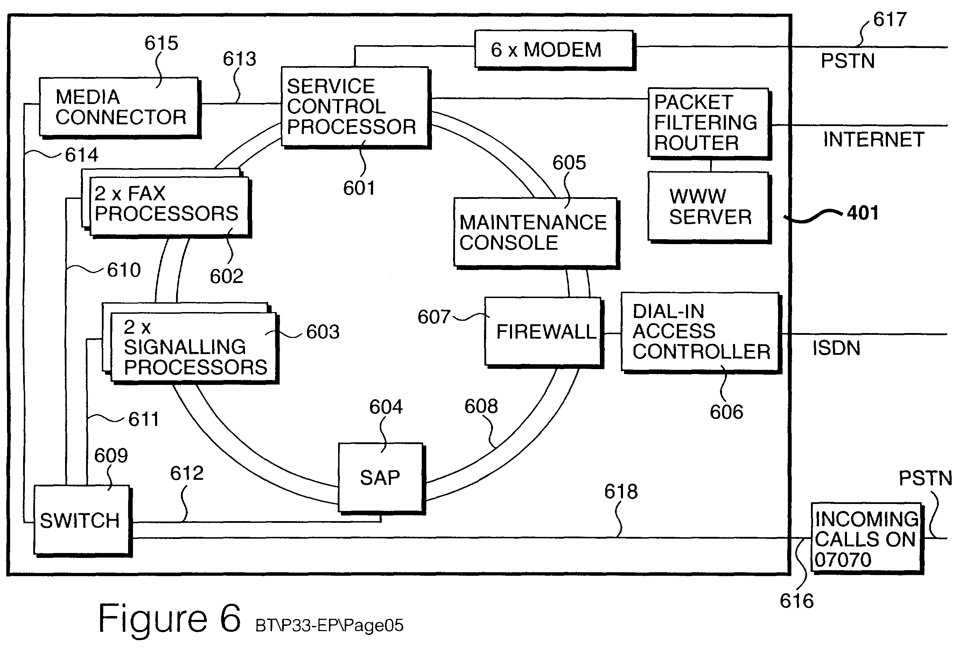

The service node 401 is detailed in Figure 6 and includes a service control processor 601, configured to execute the procedure detailed in Figure 5, along with many other procedures associated with the operations of the node. A service control processor 601 is typically based around a sun sparc server 1000E having mirrored boot disks and 128 megabytes of locally addressable storage. The processor also includes a real time profile database, an e-mail server, and a statistics database. In addition, a redundant array of disks is provided to give up to 37.8 gigabits of storage, for customer profile information and dynamic data buffering, including search results from remote databases. The system also includes a tape back-up facility thereby providing further security in addition to the redundant array.

The service control processor 601 communicates with fax processor 602, signaling processor 603, a speech applications platform 604, a maintenance console 605 and an ISDN access controller 606 via a hardware fire wall 607. Communication with these devices is provided via an FDDI token ring network 608.

In the embodiment, two fax processors are provided, each consisting of 150 megahertz rack mounted Pentium based devices configured to receive and transmit facsimile transmissions with a telecommunications switching device 609. Fax processors receive multiplexed signals over lines 610, with each individual processor being configured to receive or transmit a total of 24 simultaneous transmissions, thereby allowing a total of 48 of such transmissions to be handled by the system as a whole.

Signalling processors 603 are also 150 megahertz Pentium based systems configured to receive and interpret signalling information from the PSTN via the switch 609 over line 611.

Device 604 is an Ericsson speech applications platform having a control processor, two application processors, six speech processor cards, four algorithm processor cards, one digital line interface card and a network processor. The platform allows a user to communicate with the system using MF or speech signals such that recorded speech may be supplied to the customer, requesting inputs etc and, to a limited extent, speech utterances made by a calling customer may be recognised and interpreted by the platform.

Maintenance console 605 is based around a sun sparc five and allows local maintenance and configuration of the service control processor. The speech applications platform 604 communicates with switch 609 via multiple two megabyte per second channels 612. The switch 609 is configured in response to control signals supplied from a service control processor 601 via a twisted pair ethernet 613 connected to a thin wire ethernet 614 via a media converter 615.

Communication is provided with the PSTN 101 over channels 616. These channels are connected directly to switch 609 and in the embodiment a total of 77 of such channels, within a digital multiplex 618 are connected to said switch. Incoming calls are identified by the PSTN 101 by a prefix number, the number 07070 being identified in the present embodiment. Thus, any incoming call with this prefix will be directed to the service node, whereafter subsequent digits are extracted by the switch 609 and interpreted by a signalling processor 603, which in turn supplies control information to the service control processor 601.

Dialling access controller 606 gives secure direct dialling access for data devices, providing very high performance HTML page delivery to customers. Fire wall 607 is a CISCO 4000 ROUTER configured for HTTP transactions only, to protect against unauthorised access.

Modems provided between the service control processor 601 and PSDN line 617 give direct connection to SMS and paging systems.

## Claims

1. In a telecommunications network having a service node accessible from a plurality of customer stations, a method of searching remote databases in response to a search strategy, comprising steps of
transmitting details of a search strategy from a customer station to said service node;
disconnecting said customer-station from said service node;
issuing said search strategy from said service node to obtain response data;
storing said response data at said service node; and
retaining an indication to the effect that said response data has been obtained to provide an indication to said requesting customer.

2. A method according to claim 1, wherein said strategy details are transmittable via a plurality of transmission types.

3. A method according to claim 2, wherein strategy details are transmitted from a mobile computer via a mobile telephone using full bandwidth data transmission or SMS transmission in accordance with GSM protocols.

4. A method according to claim 2, wherein said strategy details are derived from a device configured to recognise operator handwriting.

5. A method according to claim 2 or claim 4, wherein said search strategy is transmitted from a personal digital assistant using a radio network.

6. A method according to claim 2, wherein said strategy is transmitted via a public switched network.

7. A method according to any of claims 2 to 6, wherein said details are transmitted in accordance with TCP/IP (transmission control protocol/internet protocol).

8. A method according to claim 1, wherein said strategy details include at least one key word and said service node identifies remotely stored data containing said key word.

9. A method according to claim 1, wherein said response data is copied to said service node and stored at said service node.

10. A method according to claim 9, wherein said response data includes a reference to an address and an abstract.

11. A method according to claim 10, wherein said reference is an internet URL (unique resource locator).

12. A method according to claim 1, wherein a customer station is not capable of receiving identified data and said stored data is retrieved by a customer at an alternative location.

13. A method according to claim 1, wherein said indication data is transmittable in accordance with a plurality of transmission types.

14. A method according to claim 13, wherein a transmission type is selected in dependence upon information stored at the service node specifying customer preferences.

15. A method according to claim 1, wherein the service node is configured to contact an initiating customer to identify the presence of data stored at said service node in response to the execution of said strategy.

16. A method according to claim 15, wherein said identification of the presence of data is transmitted in accordance with a first transmission type and the stored data indications are transmitted in accordance with a second transmission type.

17. A method according to claim 16, wherein said first transmission type is a paging signal or an SMS message.

18. A method according to claim 16, wherein said first transmission type is human recognisable speech.

19. A method according to claim 16, wherein an initiating customer is invited to select said second transmission type.

20. A method according to claim 16, wherein said stored data is modified for transmission in accordance with said second transmission type.
